# DEMANDE DE BREVET EUROPEEN

(11) **EP 0 993 187 A1**
(43) Date de publication de la demande: **12.04.2000**
(21) Numéro de dépôt: 99402463.6
(22) Date de dépôt: 07.10.1999
(51) Int. Cl.: H04N 5/445

(54) **Procédé et circuit d'affichage d'éléments d'image icrustés sur une image vidéo**

(30) Priorité: 09.10.1998 FR 9812693
(71) Demandeur: STMicroelectronics S.A., 94250 Gentilly (FR)
(72) Inventeur: Vos, Mark, Cabinet Ballot-Schmit, 75116 Paris (FR)
(74) Mandataire: Ballot, Paul Denis Jacques

(57) **Abrégé**

L'invention concerne un procédé d'affichage d'un ou plusieurs OSD sur une image vidéo et un circuit permettant de mettre en place le dit procédé.

Un circuit de traitement 400 permet de traiter certaines lignes de pixels en utilisant uniquement, pendant une grande partie du traitement et pour chaque pixel, des adresses désignant des lignes de mémoire d'une table de couleurs disponibles propres à chaque OSD. Un gain de place en mémoire est ainsi effectué, les valeurs qui habituellement définissent chaque pixel n'ayant pas à être mémorisées dans l'unité de traitement. Une rapidité accrue du traitement est également observée grâce au procédé selon l'invention.

## Description

La présente invention se rapporte à un procédé d'affichage d'éléments d'image incrustés sur une image vidéo et à un circuit électronique permettant de mettre en place le procédé en question.

Plus particulièrement l'invention concerne un procédé et un circuit d'affichage d'éléments d'image incrustés sur une image vidéo permettant d'améliorer, de façon économique en terme d'espace mémoire requis, la qualité des éléments d'image d'origine numérique incrustés sur une image vidéo classique.

Une image vidéo est constituée d'une succession de lignes de pixels. Les pixels sont des éléments d'image élémentaires. Dans les systèmes de télévision couleur, chaque pixel est porteur d'informations de luminance et de chrominance qui permettent de déterminer la luminosité et la couleur de chaque point de l'image. Dans les systèmes de télévision les plus utilisés, l'image évolue selon un principe de balayage horizontal de l'écran. Qu'il s'agisse du système de télévision NTSC, du système de télévision PAL, ou encore du système de télévision SECAM, chaque image affichée résulte de l'affichage alternatif de deux images partielles distinctes appelées trames. D'une façon générale, il existe une première trame, dite trame impaire, et une seconde trame, dite trame paire.

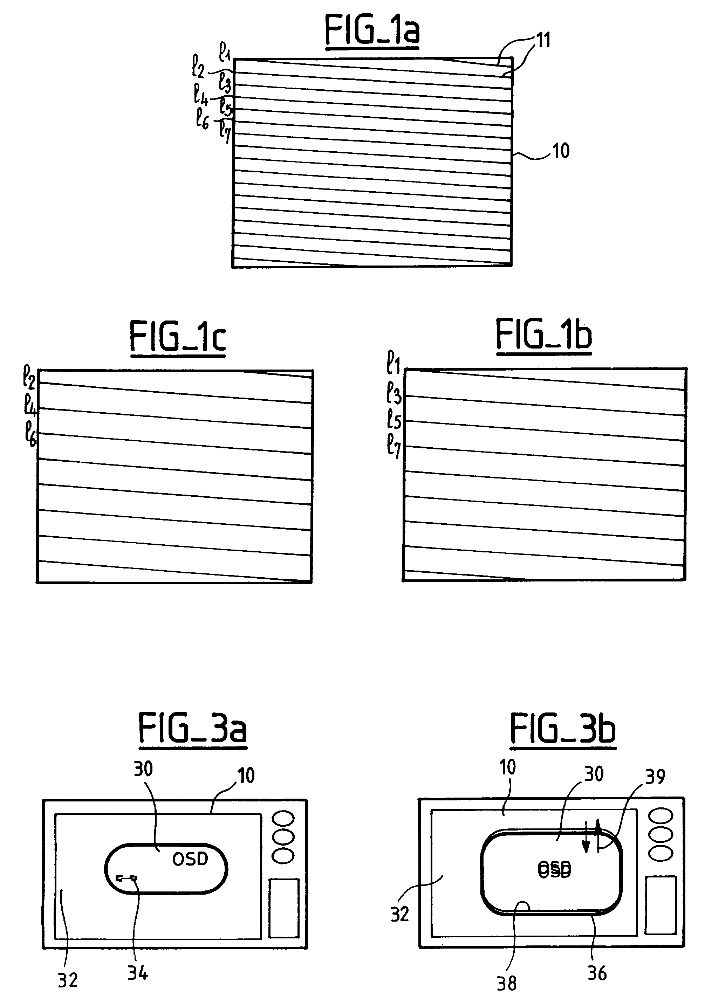

La figure la montre un écran de télévision 10 sur lequel est représenté schématiquement un ensemble de lignes 11. Des premières lignes sont numérotées l1, l2, l3... Ces lignes sont constituées d'une succession de pixels. L'image visible sur l'écran de télévision 10 de la figure 1a correspond à l'entrelacement de deux images partielles :
- une première image partielle représentée à la figure 1b, constituée des lignes impaires de l'image finale. Cette première image partielle correspond à la trame impaire de l'image.
- une deuxième image partielle représentée à la figure 1c, constituée des lignes paires de l'image finale. Cette deuxième image partielle correspond à la trame paire de l'image.

Le nombre de lignes affichées lors de la représentation d'une image vidéo dépend du système de télévision utilisé. Par exemple le système de télévision NTSC présente des images constituées de 480 lignes vidéo quasiment horizontales, ce qui correspond à l'entrelacement d'une trame impaire et d'une trame paire de 240 lignes chacune.

Dans tous les systèmes de télévision précédemment cités, la fréquence de rafraîchissement de l'image vidéo est la moitié de la fréquence de rafraîchissement des trames. Ainsi, par exemple, dans le système de télévision NTSC, une image entièrement nouvelle apparaît tous les 1/30 secondes (ce qui correspond à une fréquence de rafraîchissement de 30 Hz) alors qu'une nouvelle trame (alternativement la trame impaire et la trame paire) est rafraîchie tous les 1/60 secondes (ce qui correspond à une fréquence de rafraîchissement de 60 Hz). Dans les systèmes de télévision PAL et SECAM, la fréquence de rafraîchissement de l'image dans sa totalité est de 25 Hz.

La nature même des images de télévision, à savoir, l'entrelacement de deux images partielles, donne naissance à des problèmes de qualité de l'image, et notamment à un problème de scintillement (FLICKER dans la littérature anglaise). Ainsi, dans un cas extrême, une ligne de pixels noirs sur un fond d'image blanc donnera la désagréable impression à l'oeil humain d'apparaître et de disparaître, particulièrement si cette ligne est observée de près.

Par ailleurs, il est de plus en plus fréquent d'afficher des éléments d'image incrustés sur des images vidéo. Ces éléments d'image incrustés d'origine numérique sont appelés des OSD (On Screen Display, dans la littérature anglaise). Chaque pixel d'un OSD se caractérise par trois valeurs Y, U et V pour la détermination de la luminosité et de la couleur, et d'une valeur de transparence MW.

Les OSD servent, par exemple, à indiquer de façon permanente ou non l'avancement d'un évènement sportif. Ils indiquent notamment le score d'un match. Ils sont également utilisés par certaines chaînes de télévision qui indiquent, grâce à un OSD représentant leur logo, quelle chaîne de télévision est visible à l'écran.

La figure 2 représente schématiquement la structure courante du code d'un OSD. Un train binaire 20 contenant les codes nécessaires à l'affichage d'un OSD est composé le plus souvent de trois ensembles de bits ayant des fonctions différentes.

Un premier ensemble de bits 22 constitue l'en-tête de l'OSD (OSD - header dans la littérature anglaise). L'en-tête 22 de l'OSD comporte notamment des informations relatives au nombre de bits nécessaires pour définir un pixel, aux coordonnées de certains points caractéristiques de l'OSD...

Un deuxième ensemble de bits 24 sert à définir le panel de couleurs qui sera utilisé lors de l'affichage de l'OSD. Toutes les couleurs qui seront utilisées sont stockées dans une mémoire spécifique, dite table des couleurs disponibles appelée CLUT (Color Look-Up Table, dans la littérature anglaise). Elle est le plus souvent constituée de 256 lignes de mémoire, chaque ligne de mémoire contenant les valeurs des bits correspondant à une couleur programmée dans la table grâce au deuxième ensemble de bits 24.

Enfin, un troisième ensemble de bits 26 est constitué des adresses des lignes de mémoire de la table des couleurs disponibles contenant la couleur appropriée pour chaque pixel de l'OSD.

Si les problèmes de scintillement existent, comme il vient d'être dit, dans les images de télévision purement analogiques, ils sont faibles par rapport aux phénomènes de scintillement qui peuvent apparaître lorsqu'on affiche des éléments d'image incrustés d'origine numérique sur un fond d'image vidéo.

En effet, pour un signal de télévision analogique classique, la résolution et le contraste entre les lignes sont relativement bas. La fréquence de rafraîchissement de l'image des différents systèmes de télévision analogique est acceptable pour l'oeil humain. A une distance moyenne pour le téléspectateur, le phénomène de scintillement n'est pas perceptible.

Dans les images vidéo sans incrustations, une atténuation de ces contrastes est en effet automatiquement effectuée du fait de l'utilisation d'une caméra pour créer l'image : les caméras communément utilisées ne peuvent pas rendre de manière fiable des transitions entre des couleurs trop éloignées dans le spectre des fréquences visibles. C'est ainsi que des couleurs inappropriées apparaissant aléatoirement au niveau des transitions entre certaines couleurs. Ce phénomène est appelé aliasing dans la littérature anglaise.

Par contre lorsque des éléments d'image d'origine numérique sont incrustés sur l'image vidéo, d'importants contrastes entre deux lignes consécutives peuvent apparaître. En effet, lorsqu'un OSD est créé, le fond de l'image vidéo sur lequel l'OSD sera affiché ne peut généralement pas être connu. Ainsi, dans des cas extrêmes, un OSD bleu peut être affiché alors que le fond de l'image vidéo est rouge. D'autre part à l'intérieur même d'un OSD, rien n'interdit au concepteur de l'OSD de juxtaposer deux lignes qui contrastent fortement.

L'atténuation de contrastes ne se rencontre pas lors de la création d'un OSD du fait de l'absence de caméra dans le cycle de génération de l'image. Deux motifs de couleurs éloignées dans le spectre des fréquences visibles peuvent être juxtaposés.

Les figures 3a et 3b sont des illustrations de problèmes que l'on peut rencontrer lors de l'affichage d'un OSD sur un fond d'image vidéo.

A la figure 3a est représenté un écran de télévision 10 qui affiche un OSD 30 sur un fond d'image vidéo 32. L'OSD 30 présente notamment une zone à fond blanc sur laquelle se détache un fin trait noir 34 d'une largeur de un pixel. C'est typiquement le cas où l'effet de scintillement est le plus visible. Du fait de l'entrelacement des trames paires et impaires, le fin trait noir 34 apparaît et disparaît de façon suffisamment lente pour que ce phénomène soit détecté par l'oeil humain.

La figure 3b représente un autre type de problèmes lié à l'affichage d'un OSD sur un fond d'image vidéo.

Sur fond d'une image vidéo 32 un OSD 30, composé d'un premier motif 36 affiché avec la trame paire et d'un second motif 38 affiché avec la trame impaire, donne une impression de tremblement 39. L'OSD semble descendre et monter d'une amplitude d'un pixel, à un rythme imposé par la fréquence de rafraîchissement des trames de l'image.

Le problème de tremblement (flutter dans la littérature anglaise), a des origines identiques à celles qui créent le problème de scintillement. Le phénomène de tremblement apparaît lorsque la même image est affichée par la trame paire et par la trame impaire. Selon le système de télévision utilisé, la trame paire apparaît tous les 1/25 secondes ou 1/30 secondes en alternance avec la trame impaire. L'oeil humain détecte alors un mouvement de tremblement dû à l'apparition de l'OSD alternativement sur un ensemble de lignes puis sur l'ensemble de lignes directement voisines.

Ces phénomènes de scintillement et de tremblement sont principalement sensibles lorsqu'on affiche de longs traits horizontaux à l'écran, ce qui est fréquent dans les OSD.

Pour résoudre ces problèmes, qui sont des problèmes dits de transitions verticales dans la définition d'une image présentant un ou plusieurs OSD, il existe différentes solutions connues. Il est possible d'intervenir sur la transparence de chaque pixel d'un OSD. Afin d'éviter les transitions brutales de couleurs, il est également possible d'appliquer des filtres mathématiques qui modifient la définition de certains pixels en faisant intervenir, après pondération, les valeurs de pixels voisins pour le calcul des nouvelles valeurs des pixels concernés. Il existe d'ailleurs des circuits qui permettent une détection automatique des contrastes de couleurs trop importants entre des lignes qui se succèdent. Ces circuits effectuent alors automatiquement les opérations de pondération associées au filtre mathématique approprié.

Or, pour appliquer ces filtres mathématiques aux pixels concernés, il faut garder en mémoire les données nécessaires pour les calculs requis par les filtres mathématiques. Pour chaque pixel impliqué dans des calculs imposés par un filtre mathématique, il est souvent nécessaire de conserver en mémoire les bits de données qui correspondent aux valeurs de chaque pixel, soit 30 bits : 8 bits pour chaque valeur Y, U et V et 6 bits pour la transparence.

Ce type de solution pose un problème d'occupation importante d'espace mémoire, d'autant plus que les filtres mathématiques s'appliquent souvent à des segments horizontaux de taille importante.

D'autre part, les mémoires intervenant dans ce type d'application doivent être de faible capacité.

Le problème est résolu par l'invention en ce qu'elle présente une méthode d'affichage d'OSD sur une image vidéo qui permet d'améliorer la qualité des transitions verticales, à l'intérieur même des OSD et aux frontières horizontales entre l'OSD et l'image vidéo, en faisant intervenir la table de couleurs disponibles lors de la mise en oeuvre de différents filtres mathématiques prenant en considération des pixels de lignes adjacentes.

La table de couleurs disponibles, préalablement programmée pour chaque OSD, intervient dans la mesure où, selon l'invention, les bits de données qui correspondent aux valeurs de chaque pixel ne sont plus physiquement stockés en mémoire. La méthode selon l'invention consiste notamment à stocker uniquement les adresses de la table des couleurs disponibles contenant les informations relatives à chaque pixel. Pour une table de couleurs disponibles disposant de 256 lignes de mémoire, 8 bits d'adresse sont suffisants pour désigner chacune de ces lignes de mémoire. Selon l'invention, pour chaque pixel intervenant dans les calculs de pondération exigés par les différents filtres mathématiques, ce sont uniquement ces huit bits d'adresse qui sont conservés en mémoire.

Plus particulièrement, l'invention s'applique de façon avantageuse aux procédés d'amélioration de transitions verticales impliquant des OSD, lorsque les filtres mathématiques mis en oeuvre dans ces procédés d'amélioration font intervenir trois lignes de pixels consécutives. Ce cas de figure sera plus particulièrement détaillé dans la suite de la description.

L'invention a donc pour objet un procédé d'affichage d'un ou plusieurs OSD sur une image vidéo comprenant les étapes suivantes :
- chaque pixel de l'OSD est programmé et mis en mémoire,
- les pixels des lignes de l'OSD à afficher sans traitement particulier sont affichés en utilisant directement une table de couleurs disponibles.
- des lignes de l'OSD comportant des pixels qui nécessitent l'intervention d'un filtre mathématique, et/ou qui interviennent dans des calculs associés au filtre mathématique, sont traitées par une interface de traitement
caractérisé en ce que le traitement par l'interface de traitement comprend les étapes suivantes :
- les pixels des lignes à traiter par l'interface de traitement sont mis en mémoire dans une interface de mémoire sous forme d'adresses désignant des lignes de mémoire de la table de couleurs disponibles, chaque ligne de mémoire ainsi désignée contenant des valeurs caractéristiques des pixels de l'OSD à traiter,
- les valeurs des pixels de l'OSD à traiter sont obtenues par un adressage de la table des couleurs disponibles,
- un filtre mathématique est appliqué par une unité de calcul sur les valeurs des pixels à traiter.

Il faut préciser qu'une ligne d'un OSD correspond le plus souvent à une portion de ligne de l'écran.

L'invention propose également un circuit électronique permettant de mettre en place le procédé selon l'invention.

Les différents aspects et avantages de l'invention apparaîtront plus clairement dans la suite de la description en référence aux figures qui ne sont données qu'à titre indicatif et nullement limitatif de l'invention, et qui sont à présent introduites :
- les figures 1a, 1b et 1c, déjà décrites, montrent un écran de télévision affichant respectivement l'ensemble des lignes d'une image vidéo, les lignes de la trame impaire et les lignes de la trame paire.
- la figure 2, déjà décrite, montre une structure connue du code d'un OSD.
- les figures 3a et 3b, déjà décrites, illustrent respectivement les problèmes de scintillement et de tremblement lors de l'affichage d'un OSD sur un fond d'image vidéo.
- la figure 4 est une réalisation préférée d'un circuit permettant de mettre en oeuvre le procédé selon l'invention.

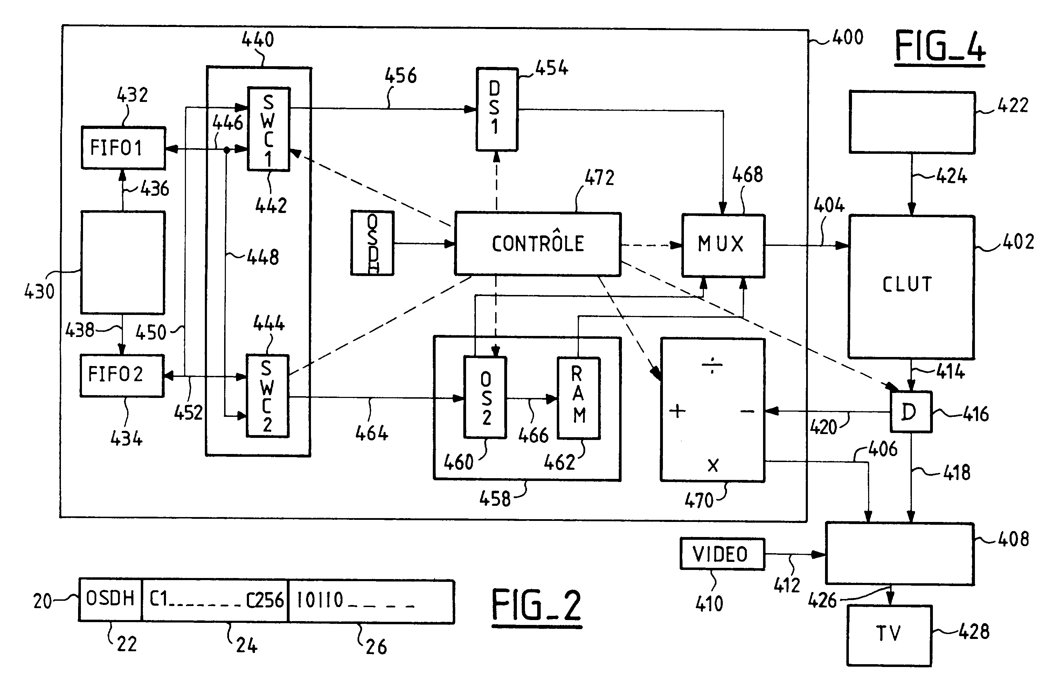

A la figure 4 une interface de traitement 400 est connectée à une table de couleurs disponibles 402 au moyen d'un premier bus de données 404. Un deuxième bus de données 406 assure d'autre part la connexion entre l'interface de traitement 400 et un module d'insertion d'OSD 408. Un signal vidéo 410 est également fourni au module d'insertion d'OSD 408 par une liaison 412. Un troisième bus de données 414 assure la connexion entre la table de couleurs disponibles 402 et une unité logique 416. Un quatrième bus de données 418 et un cinquième bus de données 420 assurent la connexion entre une unité logique 416 et respectivement le module d'insertion d'OSD 408 et l'interface de traitement 400. Un premier module de mémoire 422 est connecté à la table de couleurs disponibles 402 par un sixième bus de données 424. Enfin, une liaison 426 permet l'échange d'informations entre le module d'insertion d'OSD 408 et un récepteur de télévision 428.

L'interface de traitement 400 comprend notamment les éléments suivants :
- une interface de mémoire 430, connectée à un premier registre de type FIFO 432 et à un second registre de type FIFO 434 respectivement par un septième bus de données 436 et un huitième bus de données 438.
- une unité de décision 440. L'unité de décision 440 comprend notamment un premier connecteur 442 et un second connecteur 444. Le premier registre de type FIFO 432 est connecté au premier connecteur 442 et au second connecteur 444 respectivement au moyen d'un neuvième bus de données 446 et d'un dixième bus de données 448. Le deuxième registre de type FIFO 434 est connecté au premier connecteur 442 et au second connecteur 444 respectivement au moyen d'un onzième bus de données 450 et d'un douzième bus de données 452.
- une unité maîtresse qui, de façon simplifiée, se résume à un premier registre séparateur de données 454, est connectée au premier connecteur 442 au moyen d'un treizième bus de données 456.
- une unité esclave 458 qui comprend de façon simplifiée un second registre séparateur de données 460 et une mémoire de type mémoire RAM 462. Un quatorzième bus de données 464 assure la connexion entre le second connecteur 444 et le deuxième registre séparateur de données 460. Un quinzième bus de données 466 relie le second registre séparateur de données 460 et la mémoire de type mémoire RAM 462.
- un multiplexeur 468 qui reçoit à ses entrées un premier signal issu du premier registre séparateur de données 454, un deuxième signal issu du second registre séparateur de données 460, et un troisième signal issu de la mémoire de type RAM 462. La sortie du multiplexeur est assurée par le premier bus de données 404.
- une unité de calcul 470 qui reçoit à son entrée les informations véhiculées par le cinquième bus de données 420 et qui fournit en sortie des informations véhiculées par le deuxième bus de données 406.
- une unité de contrôle 472, qui peut également être externe à l'interface de traitement, contrôle les opérations effectuées par le premier connecteur 442, le second connecteur 444, le premier registre séparateur de données 454, le second registre séparateur de données 460, le multiplexeur 468, l'unité de calcul 470, et l'unité logique 416. L'unité de contrôle 472 prend en compte pour certaines de ces opérations les informations contenues dans l'en-tête de chaque OSD traité.

Le circuit de la figure 4 permet de mettre en oeuvre le procédé selon l'invention de la façon suivante :

Lorsqu'un OSD est programmé, la partie du code de l'OSD correspondante à l'en-tête de l'OSD est mise à disposition de l'unité de contrôle 472. La deuxième partie du code de l'OSD qui correspond à la définition des couleurs qui composeront l'OSD, est mise en mémoire dans la table de couleurs disponibles 402. La troisième partie du code de l'OSD, constituée des adresses désignant les lignes de mémoire de la table de couleurs disponibles, est divisée en deux groupes : d'une part, les données relatives aux pixels de lignes qui n'ont pas à être traitées, et qui n'interviennent dans aucun traitement, sont mémorisées dans le premier module de mémoire 422 ; d'autre part, les données relatives aux pixels de lignes qui doivent être traitées, ou qui interviennent dans un traitement, sont gérées par l'interface de traitement 400 et mémorisées dans l'interface de mémoire 430.

Pour simplifier l'explication du mécanisme de l'interface de traitement, un exemple précis est considéré. Il ne limite cependant en aucun cas la portée de l'invention, qui pourra être appliquée à des cas de traitement plus complexes.

Une ligne de pixels de l'OSD doit être traitée. Pour l'exemple considéré, on suppose que le traitement nécessite la connaissance des deux lignes de pixels directement voisines. Si on veut traiter une ligne de pixel N de la trame impaire de l'image, il faut connaître les lignes de pixels N-1 et N de la trame paire le l'image.

D'une façon générale la ligne de pixels a traiter est dite ligne maîtresse. Les autres lignes de pixels, qui interviennent dans les différents calculs, sont dites lignes esclaves. L'interface de mémoire 430 répartit les données des lignes qu'elle a en mémoire entre le premier registre de type FIFO 432, si les groupes de pixels mémorisés appartiennent à la trame impaire, et le deuxième registre de type FIFO 434, si les groupes de pixels mémorisés appartiennent à la trame paire. Les premier et deuxième connecteurs 442 et 444 permettent de transmettre les données des pixels au premier registre séparateur de données 454 s'il s'agit de la ligne maîtresse de pixels et à l'unité esclave 458 s'il s'agit de lignes esclaves de pixels. Ainsi, pour chaque pixel appartenant à une ligne de l'OSD faisant l'objet d'un traitement, les adresses désignant les lignes de mémoire de la table de couleurs disponibles, associées à chaque pixel traité, sont réparties entre l'unité maîtresse 454 pour les pixels de la ligne de l'OSD, et l'unité esclave 458 pour les autres pixels intervenant dans les calculs imposés par le filtre mathématique.

Lorsqu'il y a plus d'une ligne de pixels esclaves comme c'est le cas dans l'exemple considéré, les données relatives aux pixels des lignes supplémentaires esclaves sont mémorisées dans une mémoire de préférence de type mémoire vive comme par exemple la mémoire RAM 462.

Ainsi, lorsqu'une ligne de pixels de l'OSD d'une première trame est traitée, les adresses désignant les lignes de mémoire de la table de couleurs disponibles, pour chaque pixel n'appartenant pas à la ligne vidéo correspondante de la deuxième trame et intervenant dans les calculs de traitement, sont mémorisées dans une mémoire 462.

Pour chaque pixel, les informations mises en mémoire sont en effet les adresses désignant une ligne appropriée de la table de couleurs disponibles.

Ainsi, selon l'invention, pour chaque pixel intervenant dans l'interface de traitement, seules les adresses désignant, les lignes de mémoire appropriées de la table de couleurs disponibles sont mémorisées. Il en résulte un important gain de place en mémoire : six bits d'adresse sont souvent suffisants pour retrouver ultérieurement les valeurs d'un pixel, alors qu'il en fallait souvent trente avant la solution proposée par l'invention.

Les registres séparateurs de données envoient des groupes de données d'une taille appropriée vers le multiplexeur ou vers les cases mémoire de la RAM 462. Ainsi, si un OSD ne présente que huit couleurs, 3 bits seulement sont nécessaires pour désigner chaque ligne de mémoire de la table de couleurs disponibles effectivement utilisée. L'en-tête de chaque OSD apporte les informations nécessaire à l'unité de contrôle 472 pour effectuer ces découpages adéquats.

En fonction du filtre mathématique utilisé par l'unité de calcul 470, l'unité de contrôle 472 agit sur le multiplexeur, qui adresse alors la table de couleurs disponibles soit par l'adresse issue du premier registre séparateur de données, soit par l'adresse issue du second registre séparateur de données 460, soit par les adresses contenues dans la mémoire RAM 462. Une ligne de mémoire de la table de couleurs disponibles ainsi désignée communique à l'unité logique 416 par le troisième bus de données 414 les valeurs caractéristiques de chaque pixel impliqué dans le calcul lié au filtre. L'unité logique 416 est contrôlée par l'unité de contrôle 472.

Si les données issues de la table de couleurs disponibles 402 font suite à un adressage issu de l'interface de traitement 400, alors les données issues de la table de couleurs sont véhiculées par le cinquième bus de données 420 dans une unité de calcul 470. Sinon, les données issues de la table couleurs disponible sont véhiculées par le quatrième bus de données 418 vers le module d'insertion d'OSD 408. Cet aiguillage de données est effectué par l'unité de contrôle 472. L'unité de contrôle 472 contrôle également les opérations de l'unité de calcul 470.

Ainsi, l'unité logique 416 communique, pour chaque pixel, les données issues de la table de couleurs disponibles soit à l'interface de traitement 400, soit au module d'insertion d'OSD 408, en fonction d'un signal de contrôle issu d'une unité de contrôle 472.

Une fois les calculs effectués par l'unité de calcul 470, les nouvelles valeurs caractéristiques des pixels traités sont véhiculées par le deuxième bus de données 406 vers le module d'insertion d'OSD 408. C'est dans le module d'insertion d'OSD 408 que les lignes de chaque OSD sont insérées sur l'image vidéo, le signal vidéo 410 étant également fourni au module d'insertion d'OSD 408. L'image finale est alors prête a être transmise par une liaison câblée ou hertzienne par exemple à un récepteur de télévision 428.

D'une façon générale, dans le cas où des pixels appartenant à plus de trois lignes de l'OSD sont impliqués dans les calculs de traitement voués à améliorer la qualité des transitions verticales d'OSD, les données des pixels appartenant aux lignes supplémentaires sont mémorisées dans l'unité esclave 458 sous forme d'adresses désignant la ligne de mémoire, appropriée à chaque pixel, de la table de couleurs disponibles.

Plus précisément, pour une ligne d'un OSD appartenant à une première trame à traiter, les données des pixels n'appartenant pas à la ligne correspondante de la deuxième trame et intervenant dans les calculs de traitement, sont mémorisées dans la mémoire 462, qui est par exemple une mémoire de type RAM.

Dans tous les cas, ce sont uniquement les adresses désignant les lignes de mémoire appropriées de la table de couleurs disponibles qui sont mémorisées dans l'unité de traitement 400.

Ainsi, grâce à l'invention, un gain considérable en terme d'espace mémoire disponible est observé. De plus, moins de bits doivent être véhiculés par les bus de données pendant une grande partie du traitement, ce qui permet une accélération du traitement. Plus de pixels peuvent ainsi intervenir plus rapidement dans des calculs destinés à l'amélioration des transitions verticales dans les images présentant des OSD.

## Revendications

1. Procédé d'affichage d'un ou plusieurs OSD sur une image vidéo comprenant les étapes suivantes :
- chaque pixel de l'OSD est programmé et mis en mémoire,
- les pixels des lignes de l'OSD à afficher sans traitement particulier sont affichés en utilisant directement une table de couleurs disponibles 402,
- des lignes de l'OSD comportant des pixels qui nécessitent l'intervention d'un filtre mathématique, et/ou qui interviennent dans des calculs associés au filtre mathématique, sont traitées par une interface de traitement 400.
caractérisé en ce que le traitement par interface de traitement 400 comprend les étapes suivantes :
- les pixels des lignes à traiter par l'interface de traitement 400 sont mises en mémoire dans une interface de mémoire 430 sous forme d'adresses désignant les lignes de mémoire de la table de couleurs disponibles, chaque ligne de mémoire ainsi désignée contenant des valeurs caractéristiques des pixels de l'OSD à traiter,
- les valeurs des pixels de l'OSD à traiter sont obtenues par un adressage de la table des couleurs disponibles 402,
- un filtre mathématique est appliqué par une unité de calcul 470 sur les valeurs des pixels à traiter.

2. Procédé d'affichage d'un ou plusieurs OSD sur une image vidéo selon la revendication 1 caractérisé en ce que pour chaque pixel faisant l'objet d'un traitement, les adresses désignant les lignes de mémoire de la table de couleurs disponibles, associées à chaque pixel traité, sont réparties entre une unité maîtresse 454 pour les pixels de la ligne ou de la portion de ligne traitée, et une unité esclave 458 pour les autres pixels intervenant dans les calculs imposés par le filtre mathématique.

3. Procédé d'affichage d'un ou plusieurs OSD sur une image vidéo selon la revendication 2 caractérisé en ce que lorsqu'une ligne de pixels de l'OSD d'une première trame est traitée, les adresses désignant les lignes de mémoire de la table de couleurs disponibles pour chaque pixel n'appartenant pas à la ligne vidéo correspondante de la deuxième trame et intervenant dans les calculs de traitement, sont mémorisées dans une mémoire 462.

4. Procédé d'affichage d'un ou plusieurs OSD sur une image vidéo selon la revendication 3 caractérisé en ce que la deuxième unité de mémoire est une mémoire de type mémoire vive.

5. Circuit éléctronique permettant de mettre en oeuvre le procédé selon l'une quelconque des revendications précédentes, comprenant notamment :
- une interface de traitement 400,
- un premier module de mémoire 422,
- une table de couleurs disponibles 402 pouvant être adressée par l'interface de traitement 400 ou par le premier module de mémoire 422,
- un module d'insertion d'OSD 408,
caractérisé en ce qu'il comprend une unité logique 416 qui communique, pour chaque pixel, les données issues de la table de couleurs disponibles soit à l'interface de traitement 400, soit au module d'insertion d'OSD 408 en fonction d'un signal de contrôle issu d'une unité de contrôle 472.
